# EUROPÄISCHE PATENTSCHRIFT

(11) **EP 0 978 635 B1**
(45) Veröffentlichungstag und Bekanntmachung des Hinweises auf die Patenterteilung: **28.05.2003**
(21) Anmeldenummer: 98810751.2
(22) Anmeldetag: 05.08.1998
(51) Int. Cl.: F01K 23/10, F01K 21/04, F02C 7/18

(54) **Verfahren zur Kühlung der thermisch belasteten Strukturen einer Kraftwerksanlage**
Process for cooling the thermally stressed structures of a power plant
Procédé pour refroidir les structures thermiquement chargées d'une centrale thermique

(43) Veröffentlichungstag der Anmeldung: 09.02.2000
(73) Patentinhaber: ALSTOM (Switzerland) Ltd, 5401 Baden (CH)
(72) Erfinder: Frutschi, Hans Ulrich, 5223 Riniken (CH)

(56) Entgegenhaltungen:
- EP-A- 0 684 369
- EP-A- 0 773 349
- DE-A- 3 618 745
- GB-A- 2 318 833

## Beschreibung

### Technisches Gebiet

Die vorliegende Erfindung betrifft ein Verfahren zur Kühlung der thermisch belasteten Strukturen einer Kraftwerksanlage gemäss Oberbegriff des Anspruchs 1.

### Stand der Technik

Aus EP-0 795 685 A1 ist eine mehrstufige Gasturbine mit einer Dampfkühlung bekanntgeworden. Das hier zur Anwendung gelangende Verfahren geschieht in der Weise, dass mindestens ein Teil des mittelbar oder unmittelbar im Abhitzedampferzeuger erzeugten Dampfes zur Kühlung der thermisch belasteten Strukturen ebendieser Gasturbine eingesetzt wird. Dabei ist dieser Dampf von verschiedener Aufbereitungsstufe: Während der Hochdruckdampf die hochdruckseitigen Strukturen der Gasturbogruppe kühlt, wird Mitteldruckdampf für die Kühlung der niederdruckseitigen Strukturen eingesetzt. Nach erfolgter Kühlung wird die jeweilige Kühldampfmenge in einen Arbeitsluftstrom des Gasturbinenprozesses eingeleitet. Diese Ausrichtung zur Kühlung von thermisch belasteten Strukturen einer Gasturbine hat hinsichtlich Zuführung eines Mediums mit maximiertem Kühlpotential zweifelsohne ihre Richtigkeit, weist doch Dampf ein höheres Kühlpotential gegenüber Luft auf. Indessen, fällt die Dampfzuführung in qualitativer und quantitativer Hinsicht aus irgendeinem Grund aus, so ist man unmittelbar mit einer nicht mehr ohne weiteres beherrschbaren Situation konfrontiert, welche eine schwerwiegende Havarie auslösen kann, auch im Hinblick darauf, dass die Reaktionszeiten um hier Remedur zu bieten in allen Fällen äusserst kurz ausfallen.

Die Schrift EP-A-0 684 369 offenbart eine dampfgekühlte Gasturbine, wobei Dampf aus einem Abhitzedampferzeuger mit einem Anteil von Verdichterluft gemischt und das Gemisch als Kühlmittel in der Gasturbine eingesetzt wird.

Die Schrift EP-A1-0 773 349 offenbart eine Kraftwerksanlage, in welcher Verdichterluft zum Kühlen von thermisch belasteten Strukturen verwendet wird. Die Verdichterluft wird vorher über einen Kühlluftkühler geleitet, in welcher Dampf erzeugt wird. Der Dampf wird entweder in einer Dampfturbine entspannt oder in die Kühlluft eingeleitet.

### Darstellung der Erfindung

Hier will die Erfindung Abhilfe schaffen. Der Erfindung, wie sie in den Ansprüchen gekennzeichnet sind, liegt die Aufgabe zugrunde, bei einem Verfahren der eingangs genannten Art eine Intensivierung des Kühlpotentials zu erreichen, dies unter Beibehaltung einer inhärenten Sicherheit des Kühlsystems bei einer sequentiell betriebenen Gasturbogruppe.

Erfindungsgemäss wird dies erreicht, sowie im kennzeichnenden Teil des Anspruch 1 angegeben wird.

Vorteilhafte und zweckmässige Weiterbildungen der erfindungsgemässen Aufgabenlösung sind in den weiteren Ansprüchen gekennzeichnet.

im folgenden werden anhand der Zeichnungen Ausführungsbeispiele der Erfindung dargestellt und näher erläutert. Alle für das unmittelbare Verständnis der Erfindung nicht erforderlichen Elemente sind fortgelassen worden. Die Strömungsrichtung der Medien ist mit Pfeilen angegeben. Gleiche Elemente sind in den verschiedenen Figuren mit den gleichen Bezugszeichen versehen.

### Kurze Beschreibung der Zeichnungen

Es die einzige Figur zeigt eine Schaltung einer Gasturbine mit sequentieller Verbrennung, entsprechend der vorliegenden Erfindung.

### Wege zur Ausführung der Erfindung, gewerbliche Verwendbarkeit

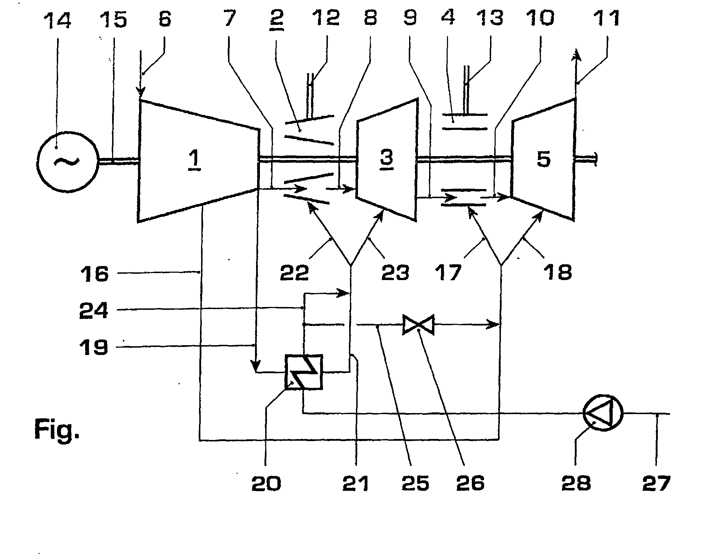

Die einzige Fig. zeigt eine Gasturbogruppe mit sequentieller Befeuerung. Hinsichtlich der zum Einsatz gelangenden Brennstoffe zum Betreiben der Brennkammern ist folgendes zu sagen: Der notwendige Brennstoff kann beispielsweise durch eine mit der Gasturbogruppe zusammenwirkende Kohlenvergasung bereitgestellt werden. Selbstverständlich ist es auch möglich, die zum Einsatz gelangenden Brennstoffe aus einem Primärnetz zu beziehen. Wird die Versorgung eines gasförmigen Brennstoffes zum Betrieb der Gasturbogruppe über eine Pipeline beigestellt, so kann das Potential aus der Druck- und/oder Temperaturdifferenz zwischen Primärnetz und Verbrauchernetz für die Belange der Gasturbogruppe, oder allgemein der Anlage, durch geeignete Massnahmen rekuperiert werden. Die Gasturbogruppe als autonome Einheit besteht aus einem Verdichter 1, einer dem Verdichter 1 nachgeschalteten ersten Brennkammer 2, einer dieser Brennkammer 2 nachgeschalteten ersten Turbine 3, einer dieser Turbine 3 nachgeschalteten zweiten Brennkammer 4 und einer dieser Brennkammer 4 nachgeschalteten zweiten Turbine 5. Die genannten Strömungsmaschinen 1, 3, 5 weisen eine einheitliche Rotorwelle 15 auf, welche durch eine nicht ersichtliche Kupplung mit einem Generator 14 gekoppelt ist. Diese Rotorwelle 15 ist vorzugsweise auf zwei nicht gezeigten Lagern gelagert, welche vorzugsweise kopfseitig des Verdichters 1 und stromab der zweiten Turbine 5 angeordnet sind. Die Verdichterstufe kann je nach Auslegung, beispielsweise um die spezifische Leistung zu steigern, in zwei nicht gezeigte Teilverdichter mit einer dazwischen geschaltete Zwischenkühlung unterteilt werden. Die angesaugte Luft 6 strömt nach deren Verdichtung vorzugsweise in ein nicht gezeigtes Gehäuse, das in sich den Verdichteraustritt und die erste Turbine 3 einschliesst. In diesem Gehäuse ist auch die erste Brennkammer 2 untergebracht, welche vorzugsweise als zusammenhängende Ringbrennkammer ausgebildet ist und worin die verdichtete Luft 7 einströmt. Selbstverständlich kann die verdichtete Luft zum Betrieb der ersten Brennkammer 2 aus einer nicht gezeigten Luftspeicheranlage beigestellt werden. Die Ringbrennkammer 2 weist kopfseitig, auf den Umfang verteilt, eine Anzahl von nicht näher dargestellten Brennern auf, welche für die Verbrennung besorgt sind. An sich können hier Diffusionsbrenner zum Einsatz gelangen. Im Sinne einer Reduzierung der SchadstoffEmissionen, insbesondere was die NOx-Emissionen betrifft, und zur Steigerung des Wirkungsgrades ist es vorteilhaft, eine Anordnung von Vormischbrennern gemäss EP-0 321 809 B1 vorzusehen, wobei der Patentgegenstand aus dieser Druckschrift einen integrierenden Bestandteil dieser Beschreibung darstellt; darüber hinaus gilt dies auch hinsichtlich der dort beschriebenen Art der Brennstoffzuführung und der Zusammensetzung der Verbrennungsluft, beispielsweise mit einem rückgeführten Rauchgas angereichert, die in der vorliegenden Figur über die Brennstoffzuführungen 12 resp. 13 zur Anwendung gelangen kann. Bezüglich Art der Zuführung und der Zusammensetzung der Verbrennungsluft gilt dies auch für die zweite Brennkammer 4. Was die Anordnung der genannten Vormischbrenner in Umfangsrichtung der Ringbrennkanner 2 betriffl, so kann eine solche bei Bedarf von der üblichen Konfiguration gleicher Brenner abweichen, stattdessen können unterschiedlich grosse Vormischbrenner zum Einsatz kommen. Dies geschieht vorzugsweise so, dass jeweils zwischen zwei grossen Vormischbrennern ein kleiner Vormischbrenner gleicher Konfiguration disponiert ist. Die grossen Vormischbrenner, welche die Funktion von Hauptbrennem erfüllen, stehen zu den kleinen Vormischbrennern, welche die Pilotbrenner dieser Ringbrennkammer 2 sind, bezüglich der sie durchströmenden Verbrennungsluft, also im Normalfall der verdichteten Luft 7 aus dem Verdichter 1, in einem Grössenverhältnis, das fallweise festgelegt wird. Im gesamten Lastbereich der Ringbrennkammer 2 arbeiten die Pilotbrenner als selbstgängige Vormischbrenner, wobei die Luftzahl fast konstant bleibt. Die Zu- oder Abschaltung der Hauptbrenner erfolgt nach bestimmten anlagespezifischen Vorgaben. Weil die Pilotbrenner im ganzen Lastbereich bei idealem Gemisch gefahren werden können, sind die NOx-Emissionen auch bei Teillast sehr gering. Bei einer solchen Konstellation kommen die umlaufenden Stromlinien im Frontbereich der Ringbrennkammer 2 sehr nahe an die Wirbelzentren der Pilotbrenner heran, so dass eine Zündung an sich nur mit den Pilotbrennern möglich ist. Beim Hochfahren wird die Brennstoffmenge 12, die über die Pilotbrenner zugeführt wird, soweit gesteigert, bis die Pilotbrenner ausgesteuert sind, d.h. bis die volle Brennstoffmenge zur Verfügung steht. Die Konfiguration wird so gewählt, dass dieser Punkt den jeweiligen Lastabwurfbedingungen der Gasturbogruppe entspricht. Die weitere Leistungssteigerung erfolgt dann über die Hauptbrenner. Bei der Spitzenlast der Gasturbogruppe sind sonach auch die Hauptbrenner voll ausgesteuert. Weil die durch die Pilotbrenner inizierte Konfiguration "kleiner" heisser Wirbelzentren zwischen den von den Hauptbrennern stammenden "grossen" kühleren Wirbelzentren extrem instabil ausfällt, wird auch bei mager betriebenen Hauptbrennern im Teillastbereich ein sehr guter Ausbrand mit zusätzlich zu den NOx-Emissionen niedrigen CO- und UHC-Emissionen erreicht, d.h. die heissen Wirbel der Pilotbrenner dringen sofort in die kleinen Wirbel der Hauptbrenner ein. Selbstverständlich kann die Ringbrennkammer 2 aus einer Anzahl einzelner rohrförmiger Brennräume bestehen, welche allenfalls schrägringförmig, bisweilen auch schraubenförmig, um die Rotorachse angeordnet sind. Diese Ringbrennkammer 2, unabhängig von ihrer Auslegung, wird und kann geometrisch so angeordnet werden, dass sie auf die Rotorlänge praktisch keinen Einfluss ausübt. Auf die daraus resultierenden Vorteile aus einer solchen Disposition, wird weiter unten näher eingegangen. Die Heissgase 8 aus dieser Ringbrennkammer 2 beaufschlagen die unmittelbar nachgeschaltete erste Turbine 3, deren kalorisch entspannende Wirkung auf die Heissgase 8 bewusst minimal gehalten wird, d.h. diese Turbine 7 wird demnach aus nicht mehr als ein bis zwei Laufschaufelreihen bestehen. Bei einer solchen Turbine 3 wird es nötig sein, einen Druckausgleich an den Stirnflächen zwecks Stabilisierung des Axialschubes vorzusehen. Die in Turbine 3 teilentspannten heissen Abgase 9, welche unmittelbar in die zweite Brennkammer 4 strömen, weisen aus dargelegten Gründen eine recht hohe Temperatur auf, vorzugsweise ist sie betriebsspezifisch so auszulegen, dass sie sicher noch um 1000°C beträgt. Diese zweite Brennkammer 4 hat im wesentlichen die Form eines zusammenhängenden ringförmigen axialen oder quasi-axialen Zylinders; sie kann selbstverständlich auch aus einer Anzahl axial, quasi-axial oder schraubenförmig angeordneten und in sich abgeschlossenen Brennräumen bestehen. Was die Konfiguration der ringförmigen, aus einem einzigen Brennraum bestehenden Brennkammer 4 betrifft, so sind in Umfangsrichtung dieses ringförmigen Zylinders mehrere Brennstofflanzen disponiert, wobei sie selbstverständlich über eine nicht gezeigte Ringleitung miteinander verbunden sein können. Diese Brennkammer 4 weist an sich keinen Brenner auf: Die Verbrennung des in die aus der Turbine 3 kommenden heissen Abgase 9 eingedüsten Brennstoffes 13 geschieht hier durch Selbstzündung, soweit freilich das Temperaturniveau eine solche Betriebssart zulässt. Ausgehend davon, dass die Brennkammer 4 mit einem gasförmigen Brennstoff, also beispielsweise Erdgas, betrieben wird, muss für eine Selbstzündung eine Temperatur der heissen Abgase 9 aus der Turbine 3 um die 1000°C vorherrschen, und dies selbstverständlich auch bei Teillastbetrieb, was für die Auslegung dieser Turbine 3 eine ursächliche Rolle spielt. Um die Betriebssicherheit und einen hohen Wirkungsgrad bei einer auf Selbstzündung ausgelegten Brennkammer zu gewährleisten, ist es eminent wichtig, dass die Flammenfront ortsmässig stabil bleibt. Zu diesem Zweck werden in dieser Brennkammer 4, vorzugsweise an der Innen- und Aussenwand, in Umfangsrichtung disponiert, eine Reihe von in der Figur nicht gezeigten Wirbel-Generatoren vorgesehen, welche in Strömungsrichtung vorzugsweise stromauf der Brennstofflanzen angeordnet sind. Die Aufgabe dieser Wirbel-Generatoren besteht darin, Wirbel zu erzeugen, in welche dann der Brennstoff eingegeben wird, und welche dann weiter stromab eine stabilisierende Rückströmzone induzieren, analog derjenige aus den Vormischbrennern in der Ringbrennkammer 2. Da es sich bei dieser zweiten Brennkammer 4, aufgrund der axialen Anordnung und der Baulänge, um eine Hochgeschwindigkeitsbrennkammer handelt, deren mittlere Geschwindigkeit grösser ca. 60 m/s beträgt, müssen die wirbelerzeugenden Elemente, also die Wirbel-Generatoren, strömungskonform ausgebildet sein. Anströmungsseitig sollen diese vorzugsweise aus einer tetraederförmigen Form mit anströmungsschiefen Flächen bestehen. Die wirbelerzeugenden Elemente können, wie bereits erwähnt, entweder an der Aussenäfläche oder an der Innenfläche der Brennkammer 4 plaziert sein, oder beiderorts wirken. Die schiefen Flächen zwischen den aussenliegenden und innenliegenden wirbelerzeugenden Elementen sind vorzugsweise spiegelbildlich angeordnet, dergestalt, dass der Durchflussquerschnitt in der Brennkammer 4 stromab dieses Ortes im Bereich der Eindüsung des Brennstoffes 13 eine eine Rückströmung erzeugende Erweiterung erfährt. Selbstverständlich können die wirbelerzeugenden Elemente auch axial zueinander verschoben sein. Die abströmungsseitige Fläche der wirbelerzeugenden Elemente ist im wesentlichen senkrecht auf die Innenwand gerichtet, so dass sich ab dort die angestrebte Rückströmzone einstellen kann. Hinsichtlich der spezifischen Ausgestaltung der Wirbel-Generatoren wird auf die Druckschrift EP-0 619 133 A1 verwiesen, welche integrierender Bestandteil dieser Beschreibung ist. Die Selbstzündung in der Brennkammer 4 muss indessen bei verschiedenen Brennstoffen auch in den transienten Lastbereichen sowie im Teillastbereich der Gasturbogruppe gesichert bleiben, d.h. es müssen Hilfsvorkehrungen vorgesehen werden, welche die Selbstzündung in der Brennkammer 4 auch dann sicherstellen, wenn sich allenfalls eine Verminderung der Temperatur der heissen Abgase 9 im Bereich der Eindüsung des Brennstoffes 13 einstellen sollte. Um dies zu gewährleisten, kann diesem Brennstoff eine kleine Menge eines anderen Brennstoffes mit einer niedrigeren Zündtemperatur beigegeben werden. Als "Hilfsbrennstoff" eignet sich hier beispielsweise Brennöl sehr gut. Der flüssige Hilfsbrennstoff, entsprechend eingedüst, erfüllt die Aufgabe, sozusagen als Zündschnur zu wirken, und lässt auch darin eine Selbstzündung in der Brennkammer 4 zu, wenn die heissen Abgase 9 aus der ersten Turbine 3 eine Temperatur unterhalb des angestrebten optimalen Niveaus aufweisen sollten. Diese Vorkehrung, Brennöl zur Sicherstellung einer Selbstzündung vorzusehen, erweist sich freilich immer dann als besonders angebracht, wenn die Gasturbogruppe mit reduzierter Last betrieben wird. Diese Vorkehrung trägt des weiteren entscheidend dazu bei, dass die Brennkammer 4 eine minimale axiale Länge aufweisen kann. Die kurze Baulänge der Brennkammer 4, die Wirkung der gewürdigten Wirbel-Generatoren zur Gemischbildung und Flammenstabilisierung sowie die fortwährende Sicherstellung der Selbstzündung sind ursächlich dafür verantwortlich, dass die Verbrennung sehr rasch erfolgt, und die Verweilzeit des Brennstoffes im Bereich der heissen Flammenfront minimal bleibt. Eine unmittelbar verbrennungsspezifisch messbare Wirkung hieraus betrifft die NOx-Emissionen, welche eine Minimierung erfahren, dergestalt, dass sie nunmehr kein Thema mehr bilden. Diese Ausgangslage ermöglicht femer, den Ort der Verbrennung klar zu definieren, was sich auf eine optimierte Kühlung der Strukturen dieser Brennkammer 4 niederschlägt. Die in der Brennkammer 4 aufbereiteten Heissgase 10 beaufschlagen anschliessend eine nachgeschaltete zweite Turbine 5. Die thermodynamischen Kennwerte der Gasturbogruppe können so ausgelegt werden, dass die Abgase 11 aus der zweiten Turbine 5 noch soviel kalorisches Potential aufweisen, um damit einen nachgeschalteten Abhitzedampferzeuger 30 (Vgl. Fig. 2) zu betreiben. Wie bereits bei der Beschreibung der Ringbrennkammer 2 hingewiesen wurde, ist diese geometrisch so angeordnet, dass sie auf die Rotorlänge praktisch keinen Einfluss ausübt. Des weiteren konnte festgestellt werden, dass die zweite Brennkammer 4 zwischen Abströmungsebene der ersten Turbine 3 und Anströmungsebene der zweiten Turbine 5 eine minimale Länge einnimmt. Da ferner die Entspannung der Heissgase 8 in der ersten Turbine 3, aus dargelegten Gründen, über wenige Laufschaufelreihen geschieht, lässt sich eine kompakte Gasturbogruppe bereitstellen. Es ist zur Steigerung des Wirkungsgrades der Gasturbogruppe von Vorteil, wenn vor der zweiten Brennkammer 4 ein in der Figur nicht ersichtlicher Kleindiffusor vorgesehen wird. Damit liesse sich der Totaldruckverlust im Gesamtsystem vermindern. Es lässt sich anhand der üblichen Diffusorauslegungsdiagramme beweisen, dass sich bereits bei einer minimalen Länge des Diffusors grosse Rückgewinnungsraten des dynamisches Drukkes erreichen lassen. Wie oben dargelegt, können die Verdichterstufen mit einer Zwischenkühlung ausgestattet sein. Um bei der Zugrundelegung einer solchen die geometrische Grundkonzeption der Gasturbogruppe, wie sie in Figur dargestellt ist, nicht zu alterieren, wird vorgeschlagen, einen in der Figur nicht ersichtlichen Zwischenkühler vorzusehen, der innerhalb des Statorgehäuses und in unmittelbarer Strömungsrichtung der Verdichterstufen plaziert ist. Die Kühlung bei diesem Zwischenkühler geschieht mittelbar oder unmittelbar. Bei unmittelbarer Zwischenkühlung kann dies beispielsweise durch ein Aggregat geschehen, dessen Betrieb auf Verdunstung des eingedüsten Wassers ausgelegt ist. Somit ergibt sich die Konfiguration, dass übliche Verbindungsleitungen zu einem ausserhalb des Statorgehäuses plazierten Zwischenkühler, und von diesem Zwischenkühler zurück durch das Statorgehäuse zur nächsten Verdichterstufe völlig entfallen. Die Bereitstellung des Kühlmediums geschieht wie folgt. Ein Teil verdichteter Luft 19 wird abgezweigt und durch einen Luftkühler 20, der als Wärmetauscher fungiert, geleitet. Dieser wird durch eine von einer Förderpumpe 28 zugeleiteten Wassermenge 27 durchströmt. Einerseits wird in diesem Luftkühler 20 die verdichtete Luft 19 gekühlt, andererseits entsteht aus dem zugeleiteten Speisewasser 27 eine Dampfmenge 24. Diese Dampfmenge wird der gekühlten Verdichterluft 21 beigemischt, womit das angestrebte hochqualitative Gemisch 22/23 erzeugt wird, welches zur Kühlung der hochdruckseitigen thermisch belasteten Strukturen der Gasturbogruppe eingesetzt wird, hier insbesondere der Strukturen der ersten Brennkammer 2 und der ersten Turbine 3. Die thermisch belasteten Strukturen niederdruckseitig werden in analoger Weise gekühlt, indem eine weitere Dampfmenge 25 über ein Regelorgan 26 direkt einer teilverdichteten Luftmenge 16 aus dem Verdichter 1 beigemischt wird. Auch hier entsteht ein hochqualitatives Gemisch 17/18 für die Kühlung der thermisch belasteten Strukturen der zweiten Brennkammer 4 und der zweiten Turbine 5. Die Kühlung aller genannten Strukturen geschieht in offenem oder geschlossenem Pfad, d.h. im konkreten Fall, dass die Brennkammern und die Turbinen einerseits parallel oder in Serie gekühlt werden können und andererseits, dass nach erfolgter Kühlung das Luft/Dampf-Gemisch an passender Stelle in den Gasturbinenprozess eingeleitet wird. Hier ist vorzugsweise auf die Schaltung hinzuweisen, wonach das Gemisch nach erfolgter Kühlung zusammen mit den teilentspannten Heissgasen 9 aus der ersten Turbine 3 durch den Brennstoff in offener Verbrennung auf die verlangte Mischtemperatur am Eintritt in die zweite Turbine 5 gebracht wird. Selbstverständlich kann auch die Einbringung des genannten Gemisches in den Arbeitsluftstrom des Gasturbinenprozesses, mindestens teilweise, stromab der Brennstoffeindüsung vorgesehen werden.

Bei allen hier gezeigten Schaltungen steht im Vordergrunde, die inhärente Sicherheit der Luftkühlung nach bewährter Methode beizubehalten, gleichzeitig das Potential des Kühlmediums zu erhöhen, indem der zu Kühlzwecken abgezweigten Luft eine Dampfmenge beigemischt wird.

### Bezugszeichenliste

- 1: Verdichter
- 2: Erste Brennkammer
- 3: Erste Turbine
- 4: Zweite Brennkammer
- 5: Zweite Turbine
- 6: Angesaugte Luft
- 7: Verdichtete Luft
- 8: Heissgase
- 9: Teilentspannte Heissgase
- 10: Heissgase
- 11: Abgase
- 12: Brennstoff
- 13: Brennstoff
- 14: Generator
- 15: Welle
- 16: Teilverdichtete Luftmenge
- 17: Kühlgemisch
- 18: Kühlgemisch
- 19: Teilmenge verdichteter Luft
- 20: Luftkühler
- 21: Gekühlte Verdichterluft
- 22: Kühlgemisch
- 23: Kühlgemisch
- 24: Dampfmenge
- 25: Dampfmenge
- 26: Regelorgan
- 27: Speisewasser
- 28: Förderpumpe
- 29: Rauchgase
- 30: Abhitzedampferzeuger
- 30a: Economizer
- 30b: Verdampfungsstufe
- 30c: Ueberhitzungsstufe
- 31: Warmwasser
- 32: Trommel
- 33: Entgastes Warmwasser
- 34: Sattdampf
- 35: Dampfmenge aus der Trommel
- 36: Dampfmenge aus der Trommel
- 37: Regelorgan
- 38: Kühlgemisch
- 39: Kühlgemisch
- 40: Heissdampf
- 41: Dampfturbine
- 42: Welle
- 43: Generator
- 44: Teilentspannte Dampfmenge
- 45: Entspannter Dampf
- 46: Kondensator
- 47: Speisewassergemisch

## Patentansprüche

1. Verfahren zur Kühlung der thermisch belasteten Strukturen einer Kraftwerksanlage, wobei die Kraftwerksanlage aus mindestens einer Gasturbogruppe besteht, welche Gasturbogruppe aus mindestens einer Verdichtereinheit (1), mindestens einer Brennkammer (2, 4), mindestens einer Turbine (3, 5) besteht, und wobei eine Dampfmenge (24, 25) aus einem von einer Teilmenge verdichteter Luft (19) im Wärmetauschverfahren durchströmten Luftkühler (20) gewonnen wird, und wobei diese Dampfmenge (24, 25) der abgekühlten verdichteten Luft (21) aus dem Luftkühler (20) beigemischt wird, und auf diese Weise ein Kühlmediumgemisch (17, 18, 22, 23) zur Kühlung der thermisch belasteten Strukturen gebildet wird,
**dadurch gekennzeichnet, dass**
die Gasturbogruppe mit einer sequentiellen Verbrennung betrieben wird und dass die hochdruckseitigen thermisch belasteten Strukturen der Gasturbogruppe mit einem aus einer endverdichteten und im Luftkühler (20) behandelten Luftmenge (19) und aus einer Dampfmenge (24) aus dem Luftkühler (20) bestehenden Kühlmediumgemisch gekühlt werden, und dass die niederdruckseitigen thermisch belasteten Strukturen der Gasturbogruppe mit einem aus einer teilverdichteten Luftmenge (16) und aus einer Dampfmenge (25) aus dem Luftkühler (20) bestehenden Kühlmediumgemisch (17, 18, 22, 23) gekühlt werden.

2. Verfahren nach Anspruch 1, **dadurch gekennzeichnet, dass** die Kühlung der thermisch belasteten Strukturen vom Kühlmediumgemisch (17, 18, 22, 23) in offenen und/oder geschlossenen Strömungspfaden durchgeführt wird, und dass das Kühlmediumgemisch (17, 18, 22, 23) im Nachgang zur erfolgten Kühlung an geeigneter Stelle in den Gasturbinenprozess eingeleitet wird.

## Claims

1. Method for cooling the thermally loaded structures of a power station system, in which case the power station system comprises at least one gas-turbine group, which gas-turbine group comprises at least one compressor unit (1), at least one combustion chamber (2, 4) and at least one turbine (3, 5), and in which case an amount of steam (24, 25) is obtained from an air cooler (20) through which part of the compressed air (19) flows in a heat exchanging process, and in which case this amount of steam (24, 25) is added to the cooled, compressed air (21) from the air cooler (20), and in this way a cooling medium mixture (17, 18, 22, 23) is formed in order to cool the thermally loaded structures,
**characterized in that**
the gas-turbine group is operated with sequential combustion and **in that** the thermally loaded structures on the high-pressure side of the gas-turbine group are cooled by a cooling medium mixture which comprises a finally compressed amount of air (19) that has been treated in the air cooler (20) and an amount of steam (24) from the air cooler (20), and **in that** the thermally loaded structures on the low-pressure side of the gas-turbine group are cooled by a cooling medium mixture (17, 18, 22, 23) comprising a partially compressed amount of air (16) and an amount of steam (25) from the air cooler (20).

2. Method according to Claim 1, **characterized in that** the thermally loaded structures are cooled by the cooling medium mixture (17, 18, 22, 23) in open and/or closed flow paths, and **in that** the cooling medium mixture (17, 18, 22, 23) is introduced into the gas-turbine process at a suitable point, once the cooling has been carried out.

## Revendications

1. Procédé pour refroidir les structures thermiquement chargées d'une centrale électrique, la centrale électrique se composant d'au moins un groupe générateur à turbines à gaz, lequel groupe générateur à turbines à gaz se compose d'au moins une unité de compresseur (1), d'au moins une chambre de combustion (2, 4), d'au moins une turbine (3, 5), et où une quantité de vapeur (24, 25) est obtenue à partir d'un refroidisseur à air (20) parcouru par une quantité partielle d'air comprimé (19) dans le procédé d'échange de chaleur, et où cette quantité de vapeur (24, 25) est mélangée avec l'air comprimé refroidi (21) provenant du refroidisseur à air (20), et de cette manière, un mélange réfrigérant (17, 18, 22, 23) est formé pour le refroidissement des structures thermiquement chargées,
**caractérisé en ce que**
le groupe générateur à turbines à gaz fonctionne avec une combustion séquentielle et **en ce que** les structures thermiquement chargées du groupe générateur à turbines à gaz du côté haute pression sont refroidies avec un mélange réfrigérant se composant d'une quantité d'air (19) finalement comprimée et traitée dans le refroidisseur à air (20) et d'une quantité de vapeur (24) provenant du refroidisseur à air (20), et **en ce que** les structures thermiquement chargées du groupe générateur à turbines à gaz du côté basse pression sont refroidies avec un mélange réfrigérant (17, 18, 22, 23) se composant d'une quantité d'air partiellement comprimé (16) et d'une quantité de vapeur (25) provenant du refroidisseur à air (20).

2. Procédé selon la revendication 1, **caractérisé en ce que** le refroidissement des structures thermiquement chargées par le mélange réfrigérant (17, 18, 22, 23) s'effectue dans des voies d'écoulement ouvertes et/ou fermées, et **en ce que** le mélange réfrigérant (17, 18, 22, 23) est introduit suite au refroidissement réussi à un endroit approprié dans le processus des turbines à gaz.
